# EUROPÄISCHE PATENTSCHRIFT

(11) **EP 1 018 703 B1**
(45) Veröffentlichungstag und Bekanntmachung des Hinweises auf die Patenterteilung: **07.03.2001**
(21) Anmeldenummer: 99100021.7
(22) Anmeldetag: 04.01.1999
(51) Int. Cl.: G06K 19/077

(54) **Laminierte, mehrschichtige Transportgutetikettenbahn mit RFID-Transpondern**
Laminated, multilayer labelweb comprising RFID-transponders
Bande d'étiquettes laminées multicouches comprenant des transpondeurs RFID

(43) Veröffentlichungstag der Anmeldung: 12.07.2000
(73) Patentinhaber: Sihl GmbH, 52355 Düren (DE)
(72) Erfinder: Liebler, Ralf Dr., 52372 Kreuzau (DE); Robertz, Bernd Dr., 52428 Jülich (DE)
(74) Vertreter: Sternagel, Fleischer, Godemeyer & Partner Patentanwälte

(56) Entgegenhaltungen:
- WO-A-96/10803
- DE-A- 19 846 295
- US-A- 5 214 566
- US-A- 5 804 026

## Beschreibung

Die Erfindung richtet sich auf eine Transportgutetikettenbahn, in die rechteckige RFID-Transponder mit Chip in einer bestimmten Anordnung integriert sind, um die Bedruckbarkeit der Oberseite der Verbundetiketten mit Laserdruckern, Thermotransferdruckern und Thermodirektdruck zu verbessern.

Aus DE-A-38 07 936 ist ein elektronisches Diebstahlsicherungssystem bekannt, das mit einer Sendefrequenz im GHz-Bereich (2,5 GHz) arbeitet, um kleine Abmessungen des passiven Sicherungselements (passiver Transponder) zu ermöglichen. Das passive Sicherungselement ist mit dem Warenetikett zu einer Einheit verbunden. Dieses aus DE-A-38 07 936 bekannte Sicherungssystem benutzt eine in DE-A-40 02 738 beschriebene ortsfeste Vorrichtung zur Registrierung und Identifizierung von frei beweglichen, passiven Funkaufzeichnungschips, die es ermöglichen, gezielte Informationen in einem angesprochenen Funkaufzeichnungschip einzuspeichern und dort gespeicherte Informationen zu einem beliebigen Zeitpunkt abzufragen. Es ist beschrieben, die passiven Registrierchips an Briefen, Päckchen, Paketen oder Gepäckstücken zu befestigen. Über die Anordnung des Chips und seine Integration in Warenetiketten oder Befestigung an Transportgut ist in den Druckschriften nichts enthalten.

DE-A-198 46 295 ist ein Dokument nach Art. 54 (3) EPÜ und richtet sich auf einen Drucker zum Bedrucken von Aufzeichnungsträgern, die wenigstens einen Transponderchip enthalten. Der Drucker weist eine Einrichtung auf zum Ansteuern der Transponderchips, um den Aufzeichnungsträger gleichzeitig oder sequentiell zu bedrucken und Informationen in den 0 Transponderchip zu schreiben oder daraus zu lesen.

Aus WO-A-96/10803 ist eine Trägeranordnung in Bahnform zum Einbau in eine kontaktlose Chipkarte bekannt. Diese weist eine Trägerfolie auf mit darauf angeordneten Transpondereinheiten mit Halbleiterchip und einer damit verbundenen Antennenspule. Auf der Transpondereinheit kann eine weitere Folien angeordnet sein.

Durch Integration von an sich bekannten passiven Transpondern für elektronische Identifikationssysteme kann die Bedruckbarkeit von Transportgutetiketten infolge von Verdickungen im Bereich der Transponder beeinträchtigt sein.

Beispielsweise führt die aus EP-A-595 549 bekannte Integration eines RFID-Transponders in fernablesbare Identifizierungsanhänger zu Verdickungen in Teilbereichen des Anhängers. Um ein Aufeinanderstapeln eines kontinuierlichen Streifens der Anhänger zu erleichtern, sind die Transponderchips aufeinanderfolgender benachbarter Anhänger asymmetrisch in unterschiedlichen Richtungen gegeneinander versetzt angeordnet. Aus diesem Dokument ist auch eine laminierte, mehrschichtige Transportgutetikettenbahn bekannt, bei der die Längserstreckung rechteckiger Etiketten mit der Bahnlaufrichtung übereinstimmt, wobei die Laminatbahn enthält: mindestens ein auf der Oberseite bedruckbares Deckblatt, eine auf der Rückseite des Deckblattes angeordnete Haftkleberschicht, in Bahnlaufrichtung in Abstand voneinander in die Laminatbahn integrierte rechteckige RFID-Transponder jeweils enthaltend Antenne und damit in elektrischer Verbindung stehenden Chip, und wobei die rechteckigen RFID-Transponder auf der Rückseite des Deckblattes angeordnet sind, wobei eine die Haftkleberschicht abdeckende, wieder ablösbare Schutzschicht vorhanden ist.

Ausgehend von diesem Stand der Technik ist es die Aufgabe der Erfindung eine laminierte, mehrschichtige Transportgutetikettenbahnen mit integrierten RFID-Transpondern so auszubilden, daß sie sich in üblichen Druckern problemlos mit optisch lesbaren Informationen bedrucken lassen.

Diese Aufgabe wird gelöst durch eine laminierte, mehrschichtige Transportgutetikettenbahn, bei der die Längserstreckung rechteckiger Etiketten mit der Bahnlaufrichtung übereinstimmt, wobei die Laminatbahn enthält:
(i) mindestens ein auf der Oberseite bedruckbares Deckblatt,
(ii) eine auf der Rückseite des Deckblattes angeordnete Haftkleberschicht,
(iii)in Bahnlaufrichtung in Abstand voneinander in die Laminatbahn integrierte rechteckige RFID-Transponder jeweils enthaltend Antenne und damit in elektrischer Verbindung stehenden Chip, und wobei die rechteckigen RFID-Transponder auf der Rückseite des Deckblattes angeordnet sind, wobei
(iv) eine die Haftkleberschicht abdeckende, wieder ablösbare Schutzschicht vorhanden ist, dadurch gekennzeichnet, daß die rechteckigen RFID-Transponder sich jeweils quer zur Laufrichtung der Laminatbahn erstrecken, so daß die kürzeren Seiten der rechteckigen RFID-Transponder parallel zu den Kanten der Laminatbahn verlaufen und die längeren Seiten der rechteckigen RFID-Transponder gleich oder kürzer als die Bahnbreite der Laminatbahn sind.

Zur Verbesserung der Reißfestigkeit der laminierten Transportgutetiketten kann zwischen der Unterseite des Deckblattes und der Haftkleberschicht eine Zwischenlage vorhanden sein, beispielsweise eine Kunststoffolie, die biaxial gereckt sein kann, oder ein Papier, oder Verstärkungsfäden, oder ein Faservlies aus synthetischen Fasern, oder ein mit synthetischen Fasern verstärktes Papier, oder eine Kombination derselben.

Als Deckblatt sind beschichtete Papiere oder unbeschichtete Papiere bevorzugt.

Bei den Beschichtungen, die üblicherweise auf der Oberseite eines Deckblattes angeordnet sind, kann es sich um Pigment und Bindemittel enthaltende Schichten handeln, die die Bedruckbarkeit verbessern. Es können aber auch funktionelle Schichten ausgebildet sein, beispielsweise wärmeempfindliche Aufzeichnungsschichten, auf denen durch Einwirkung von Wärme eine Farbe erzeugt werden kann, z.B. durch sogenannte Thermodrucker.

Anstelle von Papier können als Deckblatt auch Kunststoffolien (beispielsweise Polyethylenterephthalat, Polyethylen, Polypropylen, Polyvinylchlorid, Polycarbonat) oder Verbundmaterialien aus Papier/Kunststoffolien, Papier/Gewebe, Papier/Faservliese oder Papiere aus synthetischen Polymerfasern oder aus Mischungen von Cellulose oder synthetischen Polymerfasern verwendet werden. Diese Deckschichten können auf der Oberseite ebenfalls mit Schichten beschichtet sein, wie sie zuvor für Papier beschrieben wurden.

Geeignete Haftkleber zur Ausbildung der Haftkleberschicht sind beispielsweise haftklebende wäßrige Dispersionen auf Basis Acrylsäure, Acrylat(Ester mit C₄-C₈-Alkoholen) und/oder Methacrylat(Ester mit C₄-C₈-Alkoholen) und deren Copolymere mit Vinylacetat, Acrylnitril, Diacetonacrylamid und/oder quervernetzte Comonomere (z.B. Divinylbenzol oder Ethylendimethacrylat) mit und ohne modifizierende Harzdispersionen (Kohlenwasserstoffharze, Alkylphenolharze, Terpenphenolharze, β-Pinenharze, Kolophoniumharze, Methylstyrol-Vinyltoluolharze), Acrylathaftkleber, gelöst in organischen Lösemitteln mit z.B. Kolophonium-Triglycerid- oder hydrierten Kolophoniumharzen als klebrigmachende Komponente, durch Copolymerisation mit bifunktionellen Monomeren, wie Divinylbenzol oder Ethylendimethacrylat oder durch Copolymerisation mit UV-Fotoinitiatoren (z.B. Benzophenongruppen) derivatisierten Acrylaten, strahlenvernetzbare Haftschmelzkleber auf Acrylatbasis, Haftschmelzkleber auf Basis Isobutylen-Isopren, Isobutylen-Butadien oder Ethylen-Butadien oder deren Blockcopolymere mit Styrol (SIS-SB-, SBS- und SE/BS-Copolymere) unter Zusatz klebrigmachender Harze, wie z.B. aliphatische Olefinharze, Kolophonium- oder Terpen-Phenolharze oder Polyaromaten, in Benzin gelöste Haftkleber auf Naturkautschukbasis mit Cumaron-Inden-, Kolophonium- oder Kohlenwasserstoffharzen (z.B. Polyterpene oder Poly-β-Pinen) als Klebrigmacher.

Bis zur Verwendung als Transportgutetikett ist in der Bahn die Haftkleberschicht mit einer ablösbaren Schutzschicht abgedeckt. Beispielsweise einem sogenannten Trennpapier, das sind Papiere, die mindestens eine so ausgerüstete Oberfläche aufweisen, daß bei Kontakt mit dem Haftkleber eine Verbindung ausgebildet wird, die jedoch ohne Beeinträchtigung der Klebwirkung der Haftkleberschicht wieder lösbar ist.

Geeignete Trennpapiere sind solche mit einer Oberflächenschicht auf der Vorderseite, die als Trennmittel enthalten kann:
Polymere auf der Basis von Celluloseacetat, (Meth)acrylaten, Acrylnitril, Vinylchlorid, Vinylethern oder deren Copolymeren mit z.B. Maleinsäureanhydrid oder modifiziert mit Aldehyd- oder Iminharzen; Wachse auf der Basis von Polyethylen oder Polyamiden bzw. deren Mischungen mit Polymeren auf der Basis von Nitrocellulose, Polystyrol oder Vinylchlorid-Vinylacetatcopolymeren; Polyvinylestern mit langkettigen Alkoholen; Chromstearaten und darauf basierenden Derivaten; vernetzten Polyorganosiloxanen, gegebenenfalls in Mischung mit Vinylethern und/oder Maleinsäureanhydridpolymeren.
Siliconhaltige Adhäsivschichten werden aus Lösungen in organischen Lösemitteln oder aus wäßriger Emulsion oder als flüssige Polyorganosiloxane auf Trägermaterial aufgebracht und anschließend vernetzt. Die Vernetzung kann durch katalysierte Kondensation, durch Additionsreaktion, wie Hydrosilylierung oder mittels UV- oder ESH-Strahlung erfolgen.

Die für die Transportgutetiketten geeigneten RFID-Transponder weisen vorzugsweise eine Kunststoffolie als Träger auf, auf der die Antenne und in elektrischer Verbindung damit ein Chip angeordnet ist. Vorzugsweise sind die Chips auf rechteckigen Trägerfolien in Längsrichtung versetzt angeordnet, so daß der Abstand der Chips von den Schmalseiten der rechteckigen Trägerfolie unterschiedlich ist. Die Chips können aber auch mittig auf der Trägerfolie angeordnet sein. Ganz besonders bevorzugt ist es, wenn rechteckige Chips in Richtung der Längserstreckung der rechteckigen Trägerfolien angeordnet sind, so daß die Längserstreckungsrichtung von Trägerfolie und Chip übereinstimmen.

Es werden rechteckige RFID-Transponder verwendet, deren längere Seiten gleich oder kürzer sind als die Bahnbreite einer Transportgutetikettenbahn, in die eine Vielzahl von Transpondern integriert ist.

Bei einer Ausführungsform werden die rechteckigen RFID-Transponder bei einer Etikettenbahn mit einer Vielzahl von Transportgutetiketten quer zur Bahnlaufrichtung bei aufeinanderfolgenden Etiketten jeweils um 180° in der Ebene gedreht angeordnet, so daß sich ein unterschiedlicher Abstand der Chips von den seitlichen Bahnrändern jeweils umkehrt.

Bei einer Ausführungsform der erfindungsgemäßen Bahn ist zwischen benachbarten Etiketten jeweils mindestens eine sich quer zur Bahnlaufrichtung erstreckende vorbereitete Trennlinie ausgebildet. Es können auch zwei Trennlinien in geringem Abstand voneinander ausgebildet sein, so daß die Etiketten auf der durchgehenden Schutzschichtbahn einen Abstand voneinander aufweisen.

Bei einer anderen Ausführungsform sind das Deckblatt und die Haftkleberschicht, die gegebenenfalls vorhandene Zwischenlage und die Schutzschicht über die gesamte Breite der Bahn erstreckend ausgebildet ) und vorgestanzte Etiketten auf der durchgehenden Schutzschicht ausgebildet, wobei die Stanzlinien in Bahnlaufrichtung jeweils in Abstand von den benachbarten Seitenrändern der Etikettenbahn ausgebildet sind.

Bei einer anderen Ausführungsform sind die auf der Rückseite des Deckblattes mit einer Haftkleberschicht versehenen, einen integrierten RFID-Transponder aufweisenden Etiketten in Bahnlaufrichtung in Abstand voneinander auf der als durchgehende Bahn ausgebildeten Schutzschicht angeordnet.

Die erfindungsgemäße laminierte Transportgutetikettenbahn, die eine Vielzahl von Transportgutetiketten aufweist, kann durch Aufwickeln auf einer Hülse als Rolle konfektioniert sein oder durch Zick-Zack-Faltung (Fanfold) zu einem Stapel konfektioniert sein.

Die RFID-Transponder können in der Laminatbahn auf der Rückseite des Deckblattes aufgeklebt sein oder, in Fällen, in denen eine Zwischenlage vorhanden ist, zwischen der Deckschicht und der Zwischenlage angeordnet sein. Auch bei Anwesenheit einer Zwischenlage ist es grundsätzlich möglich, den RFID-Transponder auf der Oberfläche der Zwischenlage anzuordnen, die der Haftklebeschicht zugewandt ist.

Wenn die Transponder zwischen Verbundmaterialschichten einlaminiert sind, ist es nicht erforderlich, einen Klebstoff zur Befestigung des RFID-Transponders an einer benachbarten Schicht vorzusehen, solange die Trägerfolien des RFID-Transponders am Rand genügend von den Schichten des Laminats überlappt werden und ein fest haftender Verbund ausgebildet ist.

Bei einer Ausführungsform wird der RFID-Transponder mit dauerhaften oder wieder ablösbaren Klebstoffen auf Heißschmelz-, Dispersions- oder Lösemittelbasis an einer benachbarten Schicht haftend befestigt. Die Klebstoffe können vollflächig, rasterförmig oder punktförmig aufgebracht sein und dienen zur sicheren Fixierung der Transponder innerhalb des Laminats.

Die Haftkleberschicht kann vollflächig, streifenförmig oder rasterförmig ausgebildet sein und zwar zumindest über die gesamte Fläche des Etiketts, damit die Transportgutetiktten bei Verwendung sicher auf dem zu kennzeichnenden Transportgutstück haften.

Werden die Transponder in der Mitte langer Transportgutetiketten quer zur Längserstreckung des Etiketts angeordnet, kann unter Umständen auf die Ausbildung der Haftkleberschicht auf der Fläche des RFID-Transponders verzichtet werden, wenn der Abstand des Transponders auch zu den Seitenrändern der Bahn ausreichend ist, um eine sichere Haftung des Transportgutetiketts auf der zu kennzeichnenden Fläche bei Gebrauch zu gewährleisten. Vorzugsweise sind die RFID-Transponder in einer Hälfte der Etiketten angeordnet. Ganz besonders bevorzugt in der Nähe einer Seitenkante des Etiketts.

Vorzugsweise ist jedoch auch im Bereich des Transponders die Haftkleberschicht durchgehend ausgebildet.

Die Erfindung wird anhand der Figuren noch näher erläutert.

Abb. 1 zeigt eine Aufsicht auf die erfindungsgemäße Laminatbahn, wobei im Deckblatt 2 vorgestanzte Verbundetiketten 1 ausgebildet sind. Die vorgestanzten Etiketten sind in Bahnlaufrichtung schmaler ausgebildet als die Bahnbreite. Wenn gewünscht, können die außerhalb der vorgestanzten Etiketten befindlichen Teile des Deckblattes und der Haftkleberschicht von der durchgehenden Schutzschichtbahn entfernt sein. Schematisch wiedergegeben sind die unter dem Deckblatt 2 angeordneten RFID-Transponder 5 mit jeweils einem Chip 8.
Abb. 2 zeigt, in gleicher Weise wie Abb.1, eine Aufsicht auf die Laminatbahn, jedoch sind die rechteckigen RFID-Transponder 5 jeweils um 180° in der Ebene gedreht, so daß sich der unterschiedliche Abstand der Chips 8 von den seitlichen Bahnrändern jeweils umkehrt.
Abb. 3 zeigt einen Längsschnitt in Bahnlaufrichtung durch die in Abb. 1 wiedergegebene erfindungsgemäße Transportgutetikettenbahn mit den Verbundetiketten 1.
Auf der Unterseite des Deckblattes 2 ist der RFID-Transponder 5 unterhalb der durchgehenden Haftkleberschicht 3 angeordnet. Die der Haftkleberschicht 3 abgewandte Oberfläche des Transponders 5 ist mit Haftkleber 9 beschichtet. Darunter befindet sich die durchgehende vollflächige der Schutzschicht 4, die den Haftkleber 3,9 abgedeckt.

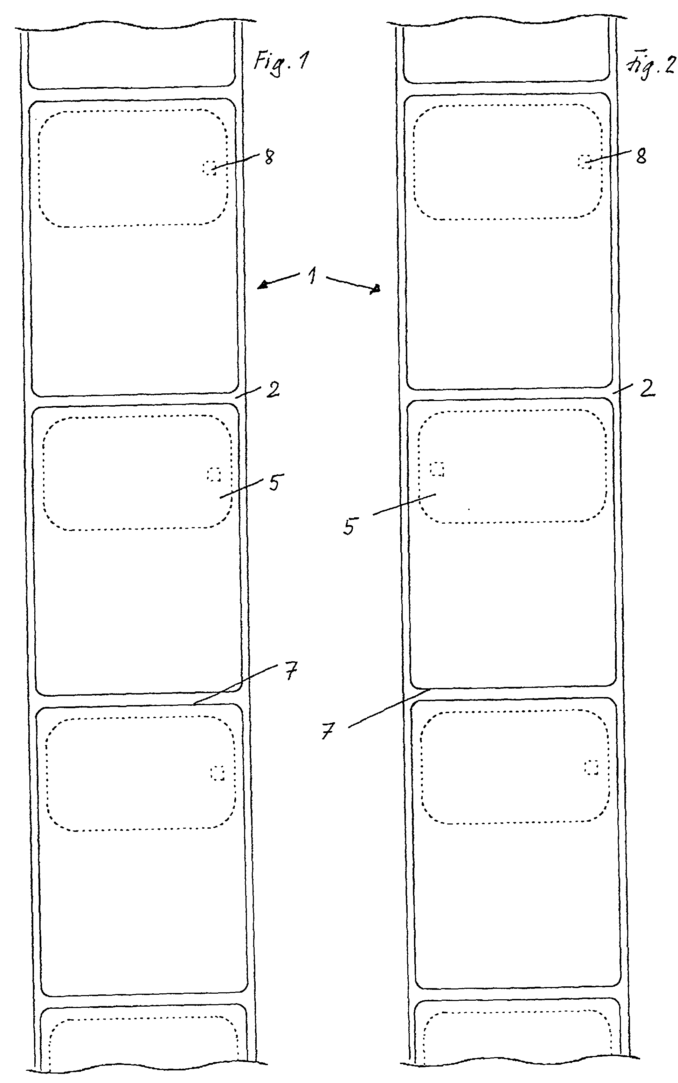

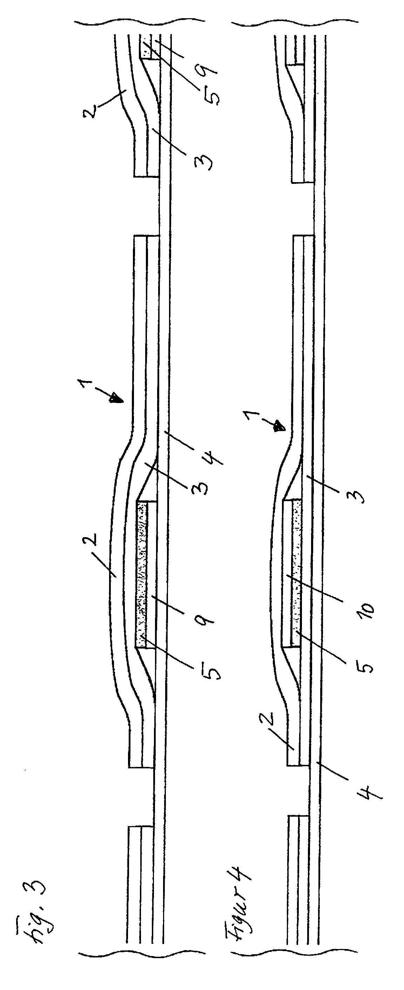

Abb. 4 zeigt ebenfalls einen Längsschnitt in Bahnlaufrichtung, jedoch sind die RFID-Transponder 5 mit Kleber 10 an der Unterseite des Deckblattes 2 befestigt. Haftkleberschicht 3 und Schutzschicht 4 entsprechen der Anordnung von Abb.3.

### Beispiel 1

Eine Rolle eines 11 cm breiten wärmeempfindlichen Aufzeichnungsmaterials mit einem Flächengewicht von 80 g/m², dessen Oberfläche eine wärmeempfindliche Aufzeichnungsschicht mit dafür üblichem bekannten Aufbau ausgebildet ist, wird von der Rolle abgewickelt, und auf die Rückseite des Papieres werden mit einem Rapport von 16 cm RFID-Transponder mit einer Trägerfolie mit den Abmessungen 48 x 96 mm² quer zur Bahnrichtung mittels eines üblichen Heißschmelzhaftklebers befestigt.
Auf die Unterseite des Deckblattes mit den aufgeklebten RFID-Transpondern wird anschließend ein vollflächig mit einem Heißschmelzkleber beschichtetes 67 g/m² Silicontrennpapier als Schutzschicht aufkaschiert.

Anschließend werden vom Deckblatt ausgehend Transportgutetiketten der Größe 11 x 16 cm² vorgestanzt, wobei ein Restgitter des Deckblattes am Rand der Bahn und zwischen Etiketten ausgebildet wird.

Beim Vorstanzen werden lediglich das Deckblatt und die Haftkleberschicht durchgestanzt, die Schutzschicht bleibt erhalten. Die Stanzlinien werden so angesetzt, daß die quer eingeklebten Transponder am linken Anfang der Etiketten positioniert sind.

Die RFID-Transponder sind, wie in Abb. 2 gezeigt, jeweils um 180° gegeneinander versetzt angeordnet. Dadurch weist die Bahn in beiden Seitenbereichen eine übereinstimmende Dicke auf, so daß sich die Bahn gut zu einer Rolle mit 200 vorgestanzten Etiketten auf einer Mittelhülse mit 76 mm Durchmesser aufwickeln läßt.
Die Transportgutetikettenbahn läßt sich aufgrund der gleichmäßigen Ausbildung der Rolle mit üblichen Thermodruckern problemlos verarbeiten, und Barcodes und andere aufgedruckte Informationen sind von einwandfreier Druckqualität und lassen sich gut lesen.

### Beispiel 2

Anstelle eines wärmeempfindlichen Aufzeichnungspapiers wird als Deckblatt ein unbeschichtetes weißes Papier mit vergleichbarem Flächengewicht verwendet. Die Anordnung von RFID-Transponder-Haftklebern und die Befestigung erfolgt wie in Beispiel 1 wiedergegeben.
Die Transportgutetikettenbahn läßt sich mit Thermotransferdruck in einwandfreier Qualität auf kommerziell erhältlichen Druckern bedrucken.

### Beispiel 3

Es wird ein wärmeempfindliches Aufzeichnungsmaterial mit einem Flächengewicht von 80 g/m² und einer Breite von 11 cm in gleicher Weise wie in Beispiel 1 beschrieben auf der Rückseite mit RFID-Transpondern bestückt.
Anschließend wird vollflächig eine Zwischenlage ausgebildet durch Zukaschieren einer kleberbeschichteten 40 µm dicken OPP-Kunststoffolie. Anschließend wird die Haftkleberschicht ausgebildet als rasterförmige Beschichtung und mit einem Silicontrennpapier als Schutzschicht abgedeckt. Es werden Etiketten in der Größe 10 x 15 cm² vorgestanzt.

Eine Rolle mit 150 Etiketten auf einer Wickelhülse mit 76 mm Durchmesser wird mit einem handelsüblichen Thermoetikettendrucker über die gesamte Fläche mit Barcodes und zusätzlichen Informationen bedruckt. Die Barcodelesbarkeit wird mit einem Barcodescanner überprüft und erweist sich als ausgezeichnet.

### Vergleichsbeispiel

In eine Rolle wärmeempfindliches Aufzeichnungsmaterial von 10 cm Breite werden RFID-Transponder der Größe 81 x 48 mm² nicht quer zur Bahnlaufrichtung, sondern sich längs in Bahnlaufrichtung erstreckend, mittig mit einem Rapport von 15 cm eingespendet. Das Material wird mit einem vollflächig mit Heißschmelzhaftkleber beschichteten Silicontrennpapier als Schutzschicht abgedeckt. Nach dem Vorstanzen und Abgittern werden Etiketten der Größe 10 x 15 cm erhalten, die zu 100 Stück zu einer Rolle auf einer Wickelhülse mit 76 mm Durchmesser aufgewickelt werden.
Die Rolle teleskopiert bei unvorsichtiger Handhabung und ist an den Rändern völlig weich. Die Bahn läuft nicht gleichmäßig zentriert durch einen Thermodrucker, sondern wandert hin und her. Der Ausdruck von optisch lesbaren Informationen im Bereich des Transponders ist gerade noch ausreichend. Rechts und links davon ist das Druckbild unleserlich, und Barcodes werden nicht gelesen.

### Bezugsziffernliste

- 1: Verbundetikett
- 2: Deckblatt
- 3: Haftkleberschicht
- 4: Schutzschicht, Liner
- 5: RFID-Transponder
- 6: Zwischenschicht, Zwischenlage
- 7: Trennlinie
- 8: Chip
- 9: Haftkleber
- 10: Kleberschicht

## Patentansprüche

1. Laminierte, mehrschichtige Transportgutetikettenbahn, bei der die Längserstreckung rechteckiger Etiketten (1) mit der Bahnlaufrichtung übereinstimmt, wobei die Laminatbahn enthält:
(i) mindestens ein auf der Oberseite bedruckbares Deckblatt (2),
(ii) eine auf der Rückseite des Deckblattes (2) angeordnete Haftkleberschicht (3),
(iii)in Bahnlaufrichtung in Abstand voneinander in die Laminatbahn integrierte rechteckige RFID-Transponder (5) jeweils enthaltend Antenne und damit in elektrischer Verbindung stehenden Chip (8), und wobei die rechteckigen RFID-Transponder (5) auf der Rückseite des Deckblattes (2) angeordnet sind, wobei
(iv) eine die Haftkleberschicht (3) abdeckende, wieder ablösbare Schutzschicht (4) vorhanden ist, dadurch gekennzeichnet, daß
die rechteckigen RFID-Transponder (5) sich jeweils quer zur Laufrichtung der Laminatbahn erstrecken, so daß die kürzeren Seiten der rechteckigen RFID-Transponder (5) parallel zu den Kanten der Laminatbahn verlaufen und die längeren Seiten der rechteckigen RFID-Transponder (5) gleich oder kürzer als die Bahnbreite der Laminatbahn sind.

2. Laminierte Transportgutetikettenbahn nach Anspruch 1, dadurch gekennzeichnet, daß zwischen der Unterseite des Deckblattes (2) und der Haftkleberschicht (3) eine die Reißfestigkeit des Etikettes erhöhende Zwischenlage (6) vorhanden ist.

3. Laminierte Transportgutetikettenbahn nach Anspruch 2, dadurch gekennzeichnet, daß die Zwischenlage (6) eine Kunststoffolie, Papier, Verstärkungsfäden, ein synthetisches Faservlies oder eine Kombination derselben ist.

4. Laminierte Transportgutetikettenbahn nach einem der vorstehenden Ansprüche, dadurch gekennzeichnet, daß die RFID-Transponder (5) eine rechteckige Kunststoffolie als Träger aufweisen, auf der die Antenne und in elektrischer Verbindung damit der Chip (8) angeordnet sind.

5. Laminierte Transportgutetikettenbahn nach Anspruch 4, dadurch gekennzeichnet, daß der Chip (8) auf der rechteckigen Trägerfolie des RFID-Transponders (5) in Längsrichtung versetzt so angeordnet ist, daß der Abstand des Chips(8) von den Schmalseiten der Trägerfolie unterschiedlich ist.

6. Laminierte Transportgutetikettenbahn nach Anspruch 5, dadurch gekennzeichnet, daß die rechteckigen RFID-Transponder (5) quer zur Bahnlaufrichtung bei aufeinanderfolgenden Etiketten (1) jeweils um 180° in der Ebene gedreht angeordnet sind, so daß sich der unterschiedliche Abstand des Chips (8) von den seitlichen Bahnrändern jeweils umkehrt.

7. Laminierte Transportgutetikettenbahn nach einem der Ansprüche 1 bis 6, dadurch gekennzeichnet, daß zwischen benachbarten Etiketten (1) jeweils mindestens eine sich quer zur Bahnlaufrichtung erstreckende vorbereitete Trennlinie (7) ausgebildet ist.

8. Laminierte Transportgutetikettenbahn nach einem der vorstehenden Ansprüche, dadurch gekennzeichnet, daß sich das Deckblatt (2), die Haftkleberschicht (3), die gegebenenfalls vorhandene Zwischenlage (6) und die Schutzschicht (4) über die gesamte Breite der Bahn erstrecken und vorgestanzte Etiketten (1) auf der durchgehenden Schutzschicht (4) ausgebildet sind und die Stanzlinien in Bahnlaufrichtung jeweils in Abstand von den benachbarten Seitenrändern der Transporgutetikettenbahn ausgebildet sind.

9. Laminierte Transportgutetikettenbahn nach einem der vorstehenden Ansprüche, dadurch gekennzeichnet, daß die auf der Rückseite des Deckblattes (2) mit einer Haftkleberschicht (3) versehenen, einen integrierten RFID-Transponder (5) und gegebenenfalls eine Zwischenlage (6) aufweisenden Etiketten (1) in Bahnlaufrichtung in Abstand voneinander auf der als durchgehende Bahn ausgebildeten Schutzschicht (4) angeordnet sind.

10. Laminierte Transportgutetikettenbahn nach einem der vorstehenden Ansprüche, dadurch gekennzeichnet, daß sie eine Vielzahl von Etiketten (1) aufweist und durch Aufwickeln auf eine Hülse als Rolle konfektioniert ist.

11. Laminierte Transportgutetikettenbahn nach einem der Ansprüche 1 bis 9, dadurch gekennzeichnet, daß sie eine Vielzahl von Etiketten (1) aufweist und durch Zick-Zack-Faltung zu einem Stapel konfektioniert ist.

## Claims

1. A laminated, multilayer transported goods label web, in which the longitudinal extension of the rectangular labels (1) corresponds with the web travel direction, wherein the laminated web comprises:
(i) at least one top sheet (2) printable on the upper side,
(ii) one pressure-sensitive adhesive layer (3) arranged on the rear of the top sheet (2),
(iii) rectangular RFID transponders (5) incorporated into the laminated web spaced from one another in the web travel direction, each transponder containing an antenna and a chip (8) in electrical connection therewith, and wherein the rectangular RFID transponders (5) are arranged on the rear of the top sheet (2), wherein
(iv) a releasable protective layer (4) is provided which covers the pressure-sensitive adhesive layer (3), characterised in that
the rectangular RFID transponders (5) each extend perpendicularly to the laminated web travel direction, such that the shorter sides of the rectangular RFID transponders (5) extend in parallel with the edges of the laminated web and the longer sides of the rectangular RFID transponders (5) are equal to or shorter than the width of the laminated web.

2. A laminated transported goods label web according to claim 1, characterised in that an interlayer (6) increasing the tear strength of the label is present between the underside of the top sheet (2) and the pressure-sensitive adhesive layer (3).

3. A laminated transported goods label web according to claim 2, characterised in that the interlayer (6) is a plastics film, paper, reinforcing filaments, a synthetic nonwoven or a combination thereof.

4. A laminated transported goods label web according to one of the preceding claims, characterised in that the RFID transponders (5) comprise a rectangular plastics film as support, on which there are arranged the antenna and the chip (8) connected electrically therewith.

5. A laminated transported goods label web according to claim 4, characterised in that the chip (8) is disposed on the rectangular supporting film of the RFID transponder (5) in staggered arrangement in the longitudinal direction, in such a way that the spacing of the chips (8) from the narrow sides of the supporting film varies.

6. A laminated transported goods label web according to claim 5, characterised in that the rectangular RFID transponders (5) are arranged perpendicularly to the web travel direction and rotated by 180° in the plane in each successive label (1) such that the distance of the chip (8) from the side edges is reversed in each case.

7. A laminated transported goods label web according to one of claims 1 to 6, characterised in that at least one prepared parting line (7) extending perpendicularly to the web travel direction is formed between adjacent labels (1).

8. A laminated transported goods label web according to one of the preceding claims, characterised in that the top sheet (2), the pressure-sensitive adhesive layer (3), the optional interlayer (6) and the protective layer (4) extend over the entire width of the web and prepunched labels (1) are formed on the continuous protective layer (4), and the punch lines are formed in the web travel direction in each case at a distance from the adjacent side edges of the transported goods label web.

9. A laminated transported goods label web according to one of the preceding claims, characterised in that the labels (1) provided on the rear of the top sheet (2) with a pressure-sensitive adhesive layer (3) and comprising an integral RFID transponder (5) and optionally an interlayer (6) are arranged at a distance from one another in the web travel direction on the protective layer (4) formed as a continuous web.

10. A laminated transported goods label web according to one of the preceding claims, characterised in that it comprises a plurality of labels (1) and is packaged by winding onto a core as a roll.

11. A laminated transported goods label web according to one of claims 1 to 9, characterised in that it comprises a plurality of labels (1) and is packaged by zigzag folding to form a stack.

## Revendications

1. Bande multicouche laminée d'étiquettes de marchandises dans laquelle le sens de la longueur d'étiquettes rectangulaires (1) coïncide avec le sens d'avance de la bande, la bande laminée contenant :
(i) au moins une feuille de couverture (2) imprimable sur le recto,
(ii) une couche adhésive (3) agencée sur le verso de la feuille de couverture (2),
(iii) des transpondeurs RFID rectangulaires (5) intégrés dans la bande laminée à une certaine distance les uns des autres dans le sens d'avance de la bande avec chacun une antenne et une puce (8) reliée électriquement à celle-ci, les transpondeurs RFID rectangulaires (5) étant agencés sur le verso de la feuille de couverture (2),
(iv) une couche de protection (4) détachable et recouvrant la couche adhésive (3), caractérisée en ce que
les transpondeurs RFID rectangulaires (5) s'étendent à chaque fois transversalement au sens d'avance de la bande laminée de telle sorte que les côtés courts des transpondeurs RFID rectangulaires (5) s'étendent parallèlement aux bords de la bande laminée et que les côtés longs des transpondeurs RFID rectangulaires (5) sont égaux ou plus courts que la largeur de la bande laminée.

2. Bande laminée d'étiquettes de marchandises selon la revendication 1, caractérisée en ce qu'il y a entre le verso de la feuille de couverture (2) et la couche adhésive (3) une couche intermédiaire (6) augmentant la résistance à la déchirure de l'étiquette.

3. Bande laminée d'étiquettes de marchandises selon la revendication 2, caractérisée en ce que la couche intermédiaire (6) est une feuille plastique, du papier, des fils de renfort, des fibres synthétiques non tissées ou une combinaison de ceux-ci.

4. Bande laminée d'étiquettes de marchandises selon l'une des revendications précédentes, caractérisée en ce que les transpondeurs RFID (5) comportent comme support une feuille plastique rectangulaire sur laquelle sont agencées l'antenne et la puce (8) en liaison électrique avec ladite antenne.

5. Bande laminée d'étiquettes de marchandises selon la revendication 4, caractérisée en ce que la puce (8) est agencée sur la feuille plastique rectangulaire du transpondeur RFID (5) avec un décalage dans le sens de la longueur de telle sorte que la distance de la puce (8) aux côtés étroits de la feuille de support est différente.

6. Bande laminée d'étiquettes de marchandises selon la revendication 5, caractérisée en ce que les transpondeurs RFID rectangulaires (5) sont agencés transversalement au sens d'avance de la bande, tournés de 180° dans un plan à chaque étiquette (1) successive de telle sorte que la distance différente de la puce (8) aux bords latéraux de la bande s'inverse à chaque fois.

7. Bande laminée d'étiquettes de marchandises selon l'une des revendications 1 à 6, caractérisée en ce qu'il est conçu entre des étiquettes voisines (1) à chaque fois au moins une ligne de séparation (7) préparée s'étendant transversalement au sens d'avance de la bande.

8. Bande laminée d'étiquettes de marchandises selon l'une des revendications précédentes, caractérisée en ce que la feuille de couverture (2), la couche adhésive (3), la couche intermédiaire (6) éventuellement présente et la couche de protection (4) s'étendent sur toute la largeur de la bande, que des étiquettes (1) prédécoupées sont conçues sur la couche de protection (4) continue et que les lignes de découpe sont conçues à chaque fois à une certaine distance dans le sens d'avance de la bande des bords latéraux voisins de la bande d'étiquettes de marchandises.

9. Bande laminée d'étiquettes de marchandises selon l'une des revendications précédentes, caractérisée en ce que les étiquettes (1) qui sont munies d'une couche adhésive (3) sur le verso de la feuille de couverture (2) et qui comportent un transpondeur RFID (5) intégré et éventuellement une couche intermédiaire (6) sont agencées dans le sens d'avance de la bande à une certaine distance les unes des autres sur la couche de protection (4) conçue comme une bande continue.

10. Bande laminée d'étiquettes de marchandises selon l'une des revendications précédentes, caractérisée en ce qu'elle comporte une pluralité d'étiquettes (1) et en ce qu'elle est confectionnée en un rouleau par enroulement sur un manchon.

11. Bande laminée d'étiquettes de marchandises selon l'une des revendications 1 à 9, caractérisée en ce qu'elle comporte une pluralité d'étiquettes (1) et en ce qu'elle est confectionnée en une pile par pliage en zigzag.
